Europäisches Patentamt

(19) European Patent Office

Office européen des brevets

(11) Numéro de publication: **0 055 169**
**A2**

# (12) DEMANDE DE BREVET EUROPEEN

(21) Numéro de dépôt: 81401987.3

(22) Date de dépôt: 11.12.81

(51) Int. Cl.³: **G 01 F 1/32, E 21 B 47/00**

---

(30) Priorité: 18.12.80 FR 8026875

(43) Date de publication de la demande: 30.06.82
Bulletin 82/26

(84) Etats contractants désignés: **DE FR GB IT NL**

(71) Demandeur: **SOCIETE DE PROSPECTION ELECTRIQUE SCHLUMBERGER, 42, rue Saint-Dominique, F-75340 Paris Cedex 07 (FR)**

(84) Etats contractants désignés: **FR IT**

(71) Demandeur: **Schlumberger Limited, 277 Park Avenue, New York, N.Y. 10172 (US)**

(84) Etats contractants désignés: **DE GB NL**

(72) Inventeur: **Hulin, Jean-Pierre François, 10 bis, rue de la Trémouille, F-94100 Saint Maur des Fossés (FR)**
Inventeur: **Flerfort, Claude, 17, rue des Fraisiers, F-91120 Lozère (FR)**
Inventeur: **Coudol, Roger, 136, rue de la Porte de Trivaux, F-92140 Clamart (FR)**

(74) Mandataire: **Hagel, Francis et al, Service Brevets ETUDES ET PRODUCTIONS SCHLUMBERGER B.P. 202, F-92142 Clamart Cedex (FR)**

---

(54) Dispositif pour la mesure du débit de fluide dans un puits.

(57) L'invention concerne un dispositif pour mesurer le débit du fluide s'écoulant dans un puits.

Ce dispositif comprend une partie supérieure (20) agencée pour être reliée à un câble de transmission, deux éléments de structure allongés, ou longerons (21), généralement parallèle et écartés l'un de l'autre, fixés à la partie supérieure, un ensemble générateur d'allées de tourbillons (25, 26) comprenant au moins un obstacle fixé entre les longerons transversalement à leur direction longitudinale, les longerons présentant, au moins dans la zone dudit ensemble, des parois en regard sensiblement planes, et un capteur (32) sensible au passage des tourbillons créés par ledit ensemble (25, 26), ledit capteur produisant un signal dont la composante utile a une fréquence représentative dudit débit.

## DISPOSITIF POUR LA MESURE DU DEBIT DE FLUIDE DANS UN PUITS

L'invention concerne la mesure du débit de fluide dans un puits, en particulier un puits producteur d'hydrocarbures, en vue de l'obtention d'un profil de débit suivant la profondeur du puits.

Pour mesurer le débit de fluide dans un puits producteur d'hydrocarbures, on descend un débitmètre dans le puits à l'aide d'un câble électrique à l'extrémité duquel est suspendu l'appareil et qui assure la transmission électrique entre le débitmètre et un équipement de surface.

Les débitmètres utilisés actuellement pour ce type de mesures sont essentiellement des débitmètres à hélice (brevet français No. 2 036 200). Ces appareils bien connus présentent toute une série d'inconvénients.

Sur le plan du principe, il faut noter que la caractéristique fréquence-débit dépend des propriétés du fluide (viscosité, densité), ce qui complique la calibration de l'appareil.

Sur le plan pratique, le fait que l'hélice soit supportée par des paliers est une source de difficultés, car les paliers sont sujets à l'usure et au blocage par le sable éventuellement entraîné par le fluide. Aux forts débits, l'hélice subit une poussée élevée qui se traduit par une usure accélérée des paliers. Cette usure est un facteur d'imprécision important aux faibles débits. En outre, à cause des frottements solides au niveau des paliers, l'hélice ne commence à tourner qu'à partir d'un débit donné. De ce fait, la caractéristique fréquence-débit ne passe pas par l'origine.

Le besoin s'est donc fait sentir de mettre au point un débitmètre qui d'une part soit adapté à l'utilisation dans un puits - c'est-à-dire qui puisse être déplacé le long du puits au moyen d'un câble et être réalisé avec une section transversale très réduite - et qui d'autre part ne présente pas les inconvénients exposés ci-dessus - c'est-à-dire ne comporte pas de pièces mobiles sujettes à l'usure et soit simple à calibrer.

Les débitmètres à émission de tourbillons décrits par exemple dans l'article de R.S. Medlock" The Vortex Flowmeter - Its Development and Characteristics" paru dans Australian Journal of Instrumentation and Control, avril 1976, pages 31-32 remplissent la seconde série de conditions. Dans ces appareils, un obstacle allongé générateur de tourbillons est placé transversalement à la conduite d'écoulement avec ses extrémités fixées à celle-ci. Les tourbillons sont émis alternativement d'un côté et de l'autre de l'obstacle, avec une fréquence proportionnelle à la vitesse locale du fluide et donc au débit, en formant ce qu'on appelle des allées de tourbillons de Karman dont la période spatiale et la largeur frontale ne dépendent que de la géométrie de l'obstacle. En associant à l'obstacle un capteur sensible au passage des tourbillons, on obtient un signal électrique dont la fréquence est proportionnelle au débit.

Les débitmètres de ce type présentent, sur une large gamme de débits, une caractéristique fréquence-débit d'une excellente linéarité et pratiquement indépendante de la densité et de la viscosité du fluide. Et cette caractéristique ne risque pas d'être affectée après des utilisations répétées étant donné l'absence de pièces mobiles.

Toutefois, le fait que dans ces appareils classiques l'obstacle soit fixé à la conduite par ses extrémités s'oppose a priori à leur utilisation dans un puits, toute liaison entre l'obstacle et la paroi du puits étant évidemment interdite.

Il existe sur le marché des débitmètres à émission de tourbillons susceptibles d'être insérés latéralement dans une conduite, qui sont commercialisés par la société Eastech de Edison, New-Jersey, USA, sous les références DS-2620 et DS-2630.

Dans ces appareils, l'obstacle traverse diamétralement l'intérieur d'un tube, et des moyens sont prévus pour insérer et fixer le tube à l'intérieur de la conduite de façon que son axe soit dirigé suivant l'axe de la conduite et qu'ainsi l'obstacle soit placé transversalement à l'écoulement.

Cette configuration conduit à isoler l'écoulement sur lequel porte la mesure de l'écoulement principal à cause de l'effet de "cheminée" dû au tube. L'écoulement secondaire ainsi créé est souvent peu représentatif de l'écoulement principal en ce qui concerne le profil des vitesses, ce qui fausse la mesure.

De plus, il se produit à partir de l'entrée du tube une turbulence qui est susceptible de perturber l'émission de tourbillons due à l'obstacle.

La demande de brevet japonais 51-60104 décrit un dispositif comparable pour la mesure du débit d'air dans les moteurs à combustion interne.

Le brevet français 2.359.427 décrit un dispositif pour mesurer la vitesse d'écoulement d'un fluide dans un milieu libre, en particulier pour mesurer la vitesse d'un hélicoptère ou autre engin. Ce dispositif comprend deux obstacles parallèles placés transversalement dans un canal d'écoulement. Il est indiqué que la section de ce canal peut être quelconque, mais qu'elle présente de préférence une dimension, dans la direction parallèle aux obstacles, plus importante que la dimension dans la direction transversale aux obstacles. Ce canal d'écoulement peut être assimilé au tube des débitmètres DS-2620 et DS-2630 sus-mentionnés.

Par ailleurs, le brevet US No. 3 810 388 indique que dans le cas de conduites à section rectangulaire, l'obstacle doit avoir une longueur active inférieure à la dimension correspondante de la conduite, afin que le rapport de la longueur à la largeur frontale de l'obstacle ne dépasse pas une limite déterminée et qu'ainsi la production de tourbillons soit satisfaisante. Il est alors prévu de munir l'obstacle de plaques d'extrémité destinées à empêcher le fluide de s'écouler le long de l'obstacle.

D'autre part, le brevet français 2.444.260 indique qu'il est avantageux de créer un écoulement bidimensionnel autour de l'obstacle, en utilisant une section d'écoulement rectangulaire ou sensiblement rectangulaire. Ce brevet présente comme désavantageuse une réalisation connue dans laquelle l'obstacle a ses extrémités fixées respectivement à deux parois parallèles elles-mêmes fixées à l'intérieur de la conduite, et propose un agencement dans lequel l'obstacle a ses extrémités fixées à la conduite et des parois parallèles à la direction axiale de l'obstacle sont placées de part et d'autre de celui-ci.

Le dispositif selon l'invention pour mesurer le débit du fluide dans un puits comprend une partie supérieure agencée pour être reliée à un câble de transmission, deux éléments de structure allongés, ou longerons, généralement parallèles et écartés l'un de l'autre, fixés à la partie supérieure, un ensemble générateur d'allées de tourbillons comprenant au moins un obstacle fixé entre les longerons transversalement à leur direction longitudinale, les longerons présentant, au moins dans la zone dudit ensemble, des parois en regard sensiblement planes, et un capteur sensible au passage des tourbillons créés par ledit ensemble, ledit capteur produisant un signal dont la composante utile a une fréquence représentative dudit débit.

Dans le dispositif selon l'invention, les longerons ont pour première fonction de supporter le ou les obstacles. En outre, leurs faces intérieures sensiblement planes fournissent le support nécessaire pour la formation d'allées de tourbillons. Il faut souligner de plus que les longerons forment une structure ouverte et ne créent pas de séparation dans la section d'écoulement, de sorte que l'écoulement sur lequel porte la mesure n'est pas distinct de l'écoulement principal.

De façon appropriée, une partie inférieure est reliée aux extrémités des longerons du côté opposé à la partie supérieure, et des moyens sont prévus pour tranquilliser l'écoulement autour de l'ensemble générateur d'allées de tourbillons afin que le profil de vitesse de la section d'écoulement au niveau de l'obstacle soit aussi proche que possible du profil de vitesse en l'absence du dispositif de mesure .Ces moyens comprennent de préférence deux profilés en forme de coin s'étendant entre les longerons respectivement à partir de la partie supérieure et de la partie inférieure et s'amincissant en direction de l'ensemble générateur d'allées de tourbillons jusqu'à une portion terminale ayant des génératrices transversales à la direction longitudinale des longerons, les profilés étant symétriques par rapport audit ensemble.

De préférence, lesdits moyens sont conçus pour créer une turbulence contrôlée en amont de l'ensemble générateur d'allées de tourbillons. La présence d'une telle turbulence renforce la puissance des tourbillons aux faibles débits. On peut l'obtenir avantageusement en donnant aux profilés précités une section sensiblement trapézoïdale.

De préférence, le capteur est un capteur de pression différentielle logé dans la partie supérieure, qui est relié à deux orifices débouchant sur les faces opposées parallèles à l'écoulement, de l'obstacle par l'intermédiaire de conduits respectifs ménagés dans les longerons.

L'invention sera bien comprise à la lecture de la description ci-après, faite en référence aux dessins annexés.

Dans les dessins :

- la figure 1 représente une sonde de diagraphie pour la mesure du débit dans un puits d'hydrocarbures;

- la figure 2 montre en perspective, à plus grande échelle, la partie centrale de la sonde de la figure 1;

- la figure 3 est une coupe transversale prise selon le plan III-III de la figure 2;

- la figure 4 illustre une variante par rapport à la forme de réalisation de la figure 2; et

- la figure 5 est une coupe axiale partielle, à plus grande échelle, selon le plan V-V de la figure 4.

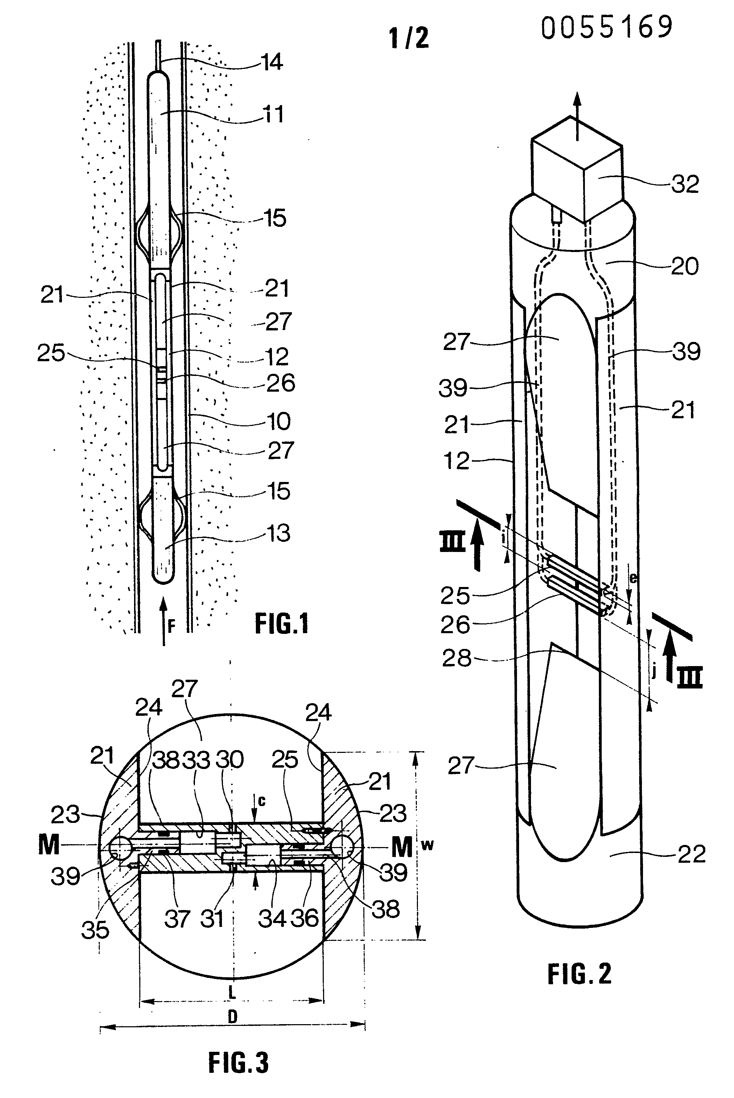

La figure 1 représente une sonde adaptée à la mesure du débit dans un puits 10. Le puits 10 est un puits producteur d'hydrocarbures dans lequel le fluide circule dans le sens ascendant représenté par la flèche F.

La sonde, de section généralement circulaire, comprend une partie supérieure 11, une partie centrale 12 et une partie inférieure 13 fixées rigidement bout à bout. La partie centrale 12 qu'on va décrire en détail ci-après sert à créer des allées de tourbillons et à détecter le passage de ces tourbillons. La partie supérieure 11 est suspendue à un câble 14 qui relie mécaniquement et électriquement la sonde à un équipement de surface, non représenté sur la figure 1. Cet équipement de surface comprend de façon classique un treuil pour l'enroulement et le déroulement du câble 14 et des moyens de traitement et d'enregistrement de signaux.

La partie supérieure 11 contient un transducteur qui produit un signal de détection et des circuits qui traitent ce signal en vue de sa transmission par le câble 14.

La partie inférieure 13 agit par son poids propre pour faciliter la descente de la sonde dans le puits contre la pression du fluide.

Des organes de centrage 15 sont fixés respectivement sur la partie supérieure 11 et sur la partie inférieure 13, de façon symétrique par rapport à la partie centrale 12. Ces organes de centrage sont classiques dans les dispositifs de diagraphie et il n'y a pas lieu de les décrire en détail ici. Ils assurent le centrage de la sonde par rapport à la paroi cylindrique du puits - tubage ou colonne de production - de manière que la vitesse d'écoulement que l'on mesure soit bien la vitesse dans la zone centrale d'écoulement.

La partie centrale 12 est représentée à plus grande échelle sur la figure 2, et la figure 3 en montre une coupe transversale.

La partie centrale comprend une pièce d'extrémité supérieure 20 à laquelle sont fixés deux éléments de structure allongés, ou longerons parallèles 21 dirigés selon l'écoulement, aux extrémités opposées desquels est fixée une pièce d'extrémité inférieure 22. Les parties supérieure 11 et inférieure 13 sont respectivement fixées aux pièces d'extrémité 20 et 22. La fixation entre les longerons 21 et les pièces d'extrémité est assurée par tout moyen approprié, par exemple par des vis non représentées.

Les pièces d'extrémité 20 et 22 ont une section circulaire de diamètre D et les parois extérieures 23 des longerons 21 constituent des secteurs circulaires de même diamètre D exactement alignés sur les pièces d'extrémité.

En revanche, les longerons présentent des parois intérieures 24 planes et parallèles, séparées par une distance L valant environ 0,7 D, D étant défini comme ci-dessus.

Entre les longerons 21 sont fixés deux éléments allongés 25, 26 générateurs de tourbillons, appelés ci-après obstacles. Les obstacles 25, 26 ont des sections rectangulaires identiques. Ils sont placés perpendiculairement aux parois intérieures 24 et symétriquement par rapport au plan médian M des parois 24 qui est parallèle à l'écoulement.

Les proportions des obstacles 25, 26 sont les suivantes : le rapport entre la largeur frontale c (dimension parallèle aux parois 24, de la face rectangulaire transversale à l'écoulement) et la longueur (dimension transversale à l'écoulement et transversale aux parois 24) de chaque obstacle, égale à la distance L entre les parois 24, est de l'ordre de 0,30 et le rapport entre la largeur frontale c et l'épaisseur e (dimension dans la direction longitudinale) vaut environ 3/2. Ces valeurs préférées ne sont pas limitatives et par exemple, le rapport c/L peut se situer entre 0,20 et 0,40.

L'agencement à deux obstacles assure de façon connue une émission de tourbillons plus forte qu'un obstacle unique. De façon appropriée, l'intervalle i entre les arêtes supérieures des obstacles 25 et 26 est compris entre 4 e et 6 e et de préférence de l'ordre de 5 e, e étant l'épaisseur susmentionnée.

On notera que dans la réalisation décrite, les parois intérieures 24 des longerons constituent des "supports" optimaux pour la formation des tourbillons. Cette fonction de "support" serait également remplie si les parois 24 étaient sensiblement planes, par exemple légèrement convexes.

D'autre part, pour jouer ce rôle de "support" de façon optimale, les parois 24 doivent avoir une largeur w (dimension transversale à l'écoulement) au moins égale à la largeur du sillage créé par les obstacles. La largeur de ce sillage ne dépend que de la forme des obstacles et de leur largeur frontale c, et vaut environ 2 c avec des obstacles de section rectangulaire. Dans la réalisation ci-dessus décrite, la largeur w est du même ordre que la longueur L de l'obstacle, et avec c/L = 0,30, vaut environ 3 c, soit 1,5 fois le minimum indiqué.

Chacune des pièces d'extrémité 20, 22 se prolonge en direction des obstacles 25, 26 par un profilé en coin 27 qui s'étend entre les longerons 21. Les profilés 27 constituent un ensemble symétrique par rapport aux obstacles 25, 26.

Dans la réalisation de la figure 2, chaque profilé 27 a une section triangulaire et s'amincit à partir de la pièce d'extrémité respective, de section circulaire, jusqu'à une arête 28 parallèle aux obstacles 25, 26 et située dans le plan médian M des parois 24 des longerons. Les arêtes 28 sont situées à une distance j de l'obstacle adjacent sensiblement égale au double de l'intervalle i entre les faces aval des obstacles, soit 10 e, la distance j étant au minimum égale à i.

Les profilés 27 servent à minimiser les turbulences parasites dues au décollement de couche limite sur la pièce d'extrémité située en amont des obstacles, la pièce inférieure 22 dans le cas présent. En d'autres termes, cet agencement minimise les pertubations induites par la présence du dispositif dans le profil de vitesses de la section d'écoulement à la hauteur de l'obstacle. Un angle d'environ 5° entre chaque face d'un profilé 27 et de la pièce d'extrémité correspondante assure une tranquillisation appropriée de l'écoulement tout en évitant d'allonger excessivement la partie centrale 12. Ceci revient à un angle au sommet d'environ 10° pour les profilés 27.

On notera que, grâce à la symétrie parfaite de la géométrie des obstacles 25, 26 et des profilés 27, le dispositif est adapté du point de vue hydraulique aussi bien à un puits producteur (fluide circulant vers le haut) qu'à un puits injecteur (fluide circulant vers le bas).

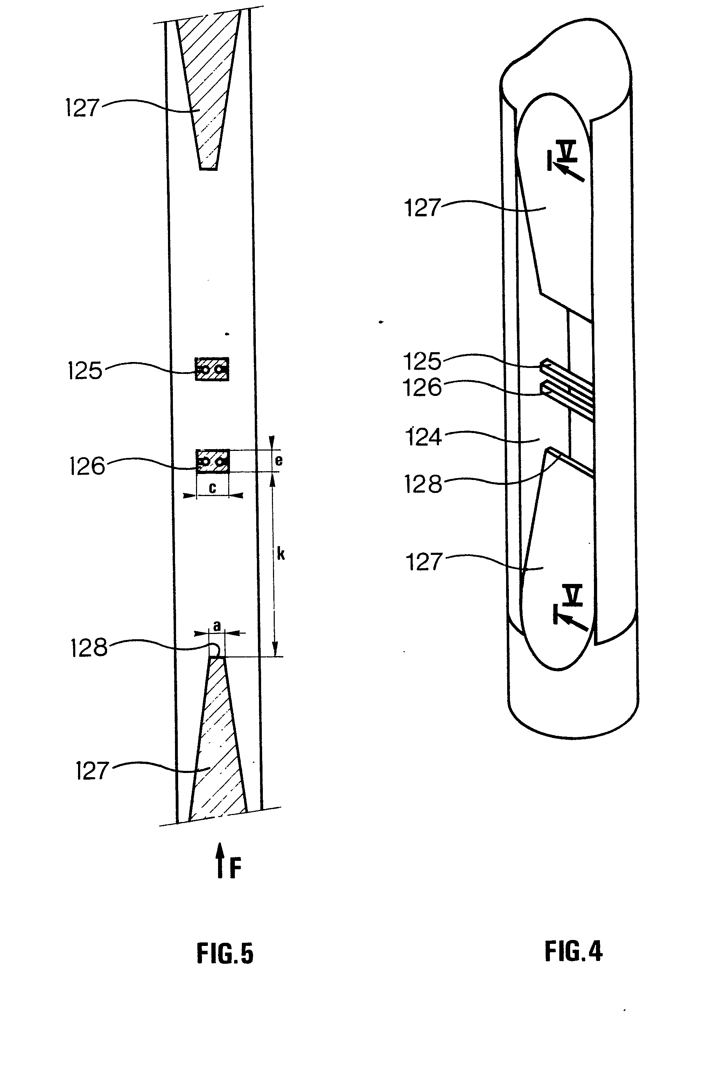

Les figures 4 et 5 illustrent une variante dans laquelle au lieu des profilés à section triangulaire, on adopte une forme tronquée, c'est-à-dire des profilés 127 à section trapézoïdale également symétriques par rapport aux obstacles 125, 126, avec le même angle au sommet d'environ 10°. La distance k entre la surface d'extrémité 128 des profilés à section trapézoïdale et l'obstacle adjacent reste la même que dans le cas des profilés triangulaires, c'est-à-dire qu'elle vaut au moins 5 e et de préférence environ 10 e. Un avantage de cette configuration tronquée est qu'elle permet de créer de façon stable une turbulence limitée en amont des obstacles, ce qui a pour effet de renforcer la puissance des tourbillons aux faibles débits. En même temps, la tranquillisation de l'écoulement procurée par les profilés tronqués est pratiquement aussi bonne qu'avec les profilés à section triangulaire.

Un autre avantage est que la longueur du dispositif peut être réduite.

De façon appropriée, la surface terminale 128 présente une dimension a, parallèle aux parois 124, qui est d'environ c/2, c étant la largeur frontale des obstacles.

La détection du passage des tourbillons qui sont émis alternativement d'un côté et de l'autre de l'obstacle 25 est assurée par deux orifices de prise de pression 30,31 débouchant sur les faces opposées, parallèles à l'écoulement, de l'obstacle 25. Ces deux orifices sont reliés à un transducteur de pression différentielle 32 représenté schématiquement sur la figure 2 et logé, comme on l'a dit plus haut, dans la partie supérieure 11. Le transducteur 32 peut être un transducteur magnétique à réluctance variable tel que le modèle DP9 de la société Validyne de Northridge, Californie, Etats-Unis d'Amérique.

Dans l'exemple représenté, la liaison entre les orifices 30,31 et le transducteur 32 est réalisée de la façon suivante.

L'obstacle 25 comprend deux alésages 33, 34 dirigés suivant sa longueur et formés à partir de ses extrémités opposées. Les alésages 33, 34 se prolongent par des parties de plus petit diamètre qui communiquent respectivement avec les orifices 30, 31. Les alésages 33, 34 permettent également d'emboîter l'obstacle sur deux tétons 35, 36 formés ou fixés respectivement sur les longerons 21, chaque téton recevant un joint d'étanchéité 37 dans une gorge. Les tétons sont percés de trous centraux 38 qui mettent en communication respectivement les alésages 33, 34 avec des conduits 39 formés dans les longerons 21 et dans la pièce d'extrémité supérieure 20, et reliés au capteur 32.

L'obstacle amont 26 est assemblé de la même manière que l'obstacle 25 sur des tétons liés aux longerons 21.

L'adaptation à la mesure dans un puits injecteur implique que les obstacles 25 et 26 puissent échanger leurs rôles. A cet effet, les conduits 39 se prolongent jusqu'à l'obstacle 26, comme le montre la figure 2, et on utilise des obstacles de forme identique, les orifices de l'obstacle amont étant obturés au moyen de bouchons démontables de sorte que seuls ceux de l'obstacle aval servent de prises de pression.

En ce qui concerne le transducteur 32, il faut noter qu'il est placé à l'intérieur d'une chambre remplie de fluide inerte, mise en équilibre de pression avec le fluide du puits par un piston de compensation. Cet agencement est classique dans les sondes de diagraphie pour puits d'hydrocarbures et il est inutile de le décrire ici plus en détail. Il évite au transducteur d'avoir à supporter la pression élevée du fluide du puits, sans changer le résultat de la mesure. Celle-ci porte en effet sur la différence entre les pressions prélevées sur les faces opposées de l'obstacle.

Le transducteur 32 reçoit un signal d'excitation de fréquence constante qui est modulé en amplitude par les variations de la grandeur mesurée, à savoir la différence entre les pressions sur les faces opposées, parallèles à l'écoulement, de l'obstacle aval. Un bloc de préamplification et de démodulation associé au transducteur 32 et non représenté sur le dessin délivre un signal composite dont la composante utile a une fréquence f égale à la fréquence d'émission des tourbillons à partir d'une face donnée de l'obstacle.

L'extraction de la fréquence f et le calcul du débit sont effectués par les moyens de traitement de l'équipement de surface.Le calcul prend en compte la vitesse de déplacement du dispositif dans le puits, mesurée à partir du déplacement du câble. Il faut en effet ajouter cette vitesse de déplacement à la vitesse "vue" par le dispositif, proportionnelle à la fréquence f, pour obtenir la vitesse réelle de l'écoulement. Le débit est ensuite déduit de cette vitesse réelle connaissant la section du puits aux différentes profondeurs.

## REVENDICATIONS

1. Dispositif pour mesurer le débit du fluide s'écoulant dans un puits, caractérisé par le fait qu'il comprend :
- une partie supérieure agencée pour être reliée à un câble de transmission;
- deux éléments de structure allongés, ou longerons, généralement parallèles et écartés l'un de l'autre, fixés à la partie supérieure;
- un ensemble générateur d'allées de tourbillons comprenant au moins un obstacle fixé entre les longerons transversalement à leur direction longitudinale, les longerons présentant, au moins dans la zone dudit ensemble, des parois en regard sensiblement planes , et
- un capteur sensible au passage des tourbillons créés par ledit ensemble, ledit capteur produisant un signal dont la composante utile a une fréquence représentative dudit débit.

2. Dispositif selon la revendication 1, caractérisé par le fait que lesdites faces des longerons ont une largeur au moins égale à la largeur du sillage formé par les allées de tourbillons créées par ledit ensemble.

3. Dispositif selon l'une des revendications 1 et 2, caractérisé par le fait qu'il comprend une partie inférieure reliée aux extrémités des longerons du côté opposé à la partie supérieure.

4. Dispositif selon la revendication 3, caractérisé par le fait qu'il comprend des moyens pour tranquilliser l'écoulement autour de l'ensemble générateur d'allées de tourbillons.

5. Dispositif selon la revendication 4, caractérisé par le fait que lesdits moyens comprennent deux profilés s'étendant entre les longerons respectivement à partir de la partie supérieure et de la partie inférieure et s'amincissant en direction de l'ensemble générateur d'allées de tourbillons jusqu'à une portion terminale ayant des génératrices transversales à la direction longitudinale des longerons, les profilés étant symétriques par rapport à l'ensemble générateur d'allées de tourbillons.

6. Dispositif selon la revendication 5, caractérisé par le fait que les profilés sont agencés pour créer une turbulence contrôlée en amont de l'ensemble générateur d'allées de tourbillons.

7. Dispositif selon la revendication 6, caractérisé par le fait que les profilés ont une section sensiblement trapézoïdale.

8. Dispositif selon la revendication 7, caractérisé par le fait que ladite portion terminale a une dimension a, dans une direction transversale auxdites génératrices, égale à environ c/2, c étant la largeur frontale des obstacles.

9. Dispositif selon l'une des revendications 5 à 8, caractérisé par le fait que les profilés ont un angle au sommet d'environ 10°.

10. Dispositif selon l'une des revendications 1 à 9, caractérisé par le fait que le capteur est un capteur de pression différentielle logé dans la partie supérieure, qui est relié à deux orifices débouchant sur les faces opposées parallèles à l'écoulement, de l'obstacle par l'intermédiaire de conduits respectifs ménagés dans les longerons.

11. Dispositif selon la revendication 10, caractérisé par le fait que l'obstacle est emboîté sur des tétons formés ou fixés sur les faces intérieures des longerons .

12. Dispositif selon l'une des revendications 1 à 11, caractérisé par le fait que l'ensemble générateur d'allées de tourbillons comprend deux obstacles ayant des sections rectangulaires identiques.

13. Dispositif selon la revendication 12, caractérisé par le fait que l'intervalle séparant les faces amont des deux obstacles est comprise entre 4 e et 6 e, e étant la dimension de chaque obstacle suivant la direction longitudinale des longerons.

14. Dispositif selon la revendication 4 et la revendication 12, caractérisé par le fait que la portion terminale de chaque profilé est écarté de l'obstacle adjacent d'une distance d'environ 10 e, e étant la dimension de chaque obstacle suivant la direction longitudinale des longerons.

0055169

**FIG.1**

**FIG.3**

**FIG.2**

127

125

126          e
              c

              k

128          a

127

↑F

**FIG.5**

127

125
126
124
128

127

**FIG.4**